## Europäisches Patentamt

(19) **European Patent Office**

**Office européen des brevets**

(11) Publication number: **0 104 723**
**B1**

(12) **EUROPEAN PATENT SPECIFICATION**

(45) Date of publication of patent specification: **21.01.87**

(51) Int. Cl.⁴: **F 16 B 13/08,** E 02 D 5/80, E 21 D 21/00

(21) Application number: **83304346.6**

(22) Date of filing: **27.07.83**

(54) Self-undercutting masonry anchor.

(30) Priority: **24.09.82 US 422628**

(43) Date of publication of application:
**04.04.84 Bulletin 84/14**

(45) Publication of the grant of the patent:
**21.01.87 Bulletin 87/04**

(84) Designated Contracting States:
**BE DE FR GB IT**

(56) References cited:
**FR-A-1 126 528**
**GB-A- 215 623**
**GB-A- 904 899**
**US-A-3 855 745**

(73) Proprietor: **Olin Corporation**
**427 North Shamrock Street**
**East Alton Illinois 62024 (US)**

(72) Inventor: **Harris, Frederick J**
**7 Fir Ridge Road**
**Clinton Connecticut 06413 (US)**
Inventor: **Wentworth, Nathaniel N.**
**85 Cold Spring Drive**
**Westbrook Connecticut 06498 (US)**

(74) Representative: **Lambert, Hugh Richmond et al**
**D. YOUNG & CO. 10 Staple Inn**
**London, WC1V 7RD (GB)**

Courier Press, Leamington Spa, England.

## Description

This invention relates generally to self-undercutting anchors used in the construction industry to set anchors in concrete or masonry.

The use of self-drilling anchors has been a common practice in the construction industry for many years. This type of an anchor obviates the need for performing two separate drilling operations. Prior to the introduction of self-drilling anchors, an initial hole was drilled and then a re-drilling operation was performed to create an undercut or bell-shaped hole into which the expandable portion of expandable anchor would project upon setting the anchor in the hole.

The advent of self-drilling anchors brought the use of expansion sleeves which were employed in a percussion or rotary drilling device. The contact or drilling end of the sleeve was designed for expansion by cutting slots or grooves of a predetermined length about the cylindrical surface or periphery of the sleeve. The grooves or slots typically permitted the sleeve to be easily fractured, but only when an expansion means was provided in the setting operation. Various types of wedged expanders have been employed with expansion anchoring devices to accomplish the expansion of the anchor into an undercut hole or to create a bell-shaped undercut hole. In all of the prior art devices the expansion sleeve expands outwardly or radially while the cutting teeth on the lead edge of the expansion sleeve evacuate the concrete or other material. However, this radial expansion interferes with the non-evacuated concrete or sidewall material. In concrete, this is especially critical since the interference or contacting by the intermediate sleeve with the surrounding concrete causes the pulverization of the surrounding material and a resultant over-enlarging of the undercut hole. Upon loading, this over-enlargement permits the anchor to move in the direction of the applied force. This direction of movement is into the over-enlarged hole and therefore weakens the hole, as well as reducing the holding strength of the anchor.

The optimum for any anchor set in concrete or other material, such as masonry, is to achieve a holding power that is limited by the strength of the material of the anchor itself, and not by the strength of the concrete or other surrounding material. Where over-enlargement of the predrilled hole occurs because of the pulverization or crushing of the surrounding material, the holding power is lessened. Typically the anchor is pulled from its predrilled hole under loading well below the critical strength of the anchoring material.

Other types of expandable sleeve anchoring devices have employed preloading tabs that grip the surrounding material in the predrilled hole near the top prior to the sleeve being expanded permanently in the position for the use of an expander cone or wedge on the lower portion of the sleeve. Typically, however, these expandable sleeves suffer from the same drawback of pulverizing or crushing the surrounding material to over-enlarge the hole so that under heavy loading the anchor tends to move in the direction of the applied load, despite the presence of the initial restraining lugs.

The foregoing problems are solved in the design of the present invention by providing an improved self-undercutting anchor that does not over-enlarge the predrilled hole during the setting of the anchor.

The self-undercutting anchor of this invention broadly comprises a self-undercutting anchor for insertion and securing in a predrilled hole in a substrate comprising:

(a) a central bolt portion formed at one end with a shaped tip portion for insertion into said hole and at the opposite end with means for securing an attachment to the anchor when secured in said hole;

(b) an expander portion formed on said bolt portion adjacent, but spaced from said tip portion and comprising oppositely directed tapered sections orientated so that, when considered along the axis of the bolt the diameter of the expander portion increases from a minimum value at its opposite ends to a maximum value at a point intermediate those ends;

(c) an elongate sleeve slidably engageable with said bolt from said opposite end and having an expansible forward end engageable against the rearwardly directed tapered section of the expander portion of the bolt, the expansible forward end of the sleeve being constituted by a plurality of fingers spaced around the forward end of the sleeve and separated one from the other by a plurality of axial slots formed in the forward end of the sleeve;

(d) the sleeve further having adjacent but spaced from the forward end an annular shoulder extending around said sleeve and intersected by said slots, the shoulder having an external diameter greater than the external diameter collectively defined by said fingers and greater than that of the adjacent, rearwardly extending section of the sleeve; and

(e) the forward end of each of said fingers being formed with at least one cutting tooth inclined to the axis of the finger and having a chamfered cutting edge, the chamfered cutting edges collectively defining a diameter greater than that collectively defined by the fingers; the said cutting edges thereby serving, after placement of the anchor in the predrilled hole, and as the sleeve is driven axially onto the bolt, thereby to force said fingers into engagement with the expansion member with concomitant expansion of the fingers, to make its own undercut in the predrilled hole without the periphery of the fingers touching the inner walls of the hole.

The particularly advantageous feature of the present invention is the provision of an area of reduced diameter immediately above the cutting edges of the teeth on the expandable fingers so that upon expansion the peripheral surface of the expandable fingers do not interfere with the surrounding material.

Preferred features of the invention will become apparent as the description proceeds.

The invention will be further described with reference to the accompanying drawings, in which:

Figure 1 is a side elevational view of a self-undercutting anchor in accordance with this invention showing the central bolt portion with the expander portion and the sleeve placed thereover;

Figure 2 is an exploded side elevational view of the anchor of Figure 1;

Figure 3 is a perspective view of an alternate embodiment of the expandable sleeve that has been removed from a hole, showing the fracturing that takes place along the lines created by the sleeve slots;

Figure 4 is a sectional view of a portion of the unexpanded sleeve showing the areas of reduced diameter above the cutting edges of the teeth mounted on the expandable fingers;

Figures 5, 6 and 7 show the setting of the expandable sleeve over the expansion cone or expander portion of the central bolt as the sleeve is set downwardly in the predrilled hole to create its own undercut; and

Figure 8 is an enlarged partial side elevational view of one expandable finger from the expandable sleeve showing how the cutting edge of the tooth evacuates the surrounding material and the area of reduced diameter avoids interference with the surrounding material while the shoulder creates a secondary engagement surface with the surrounding material.

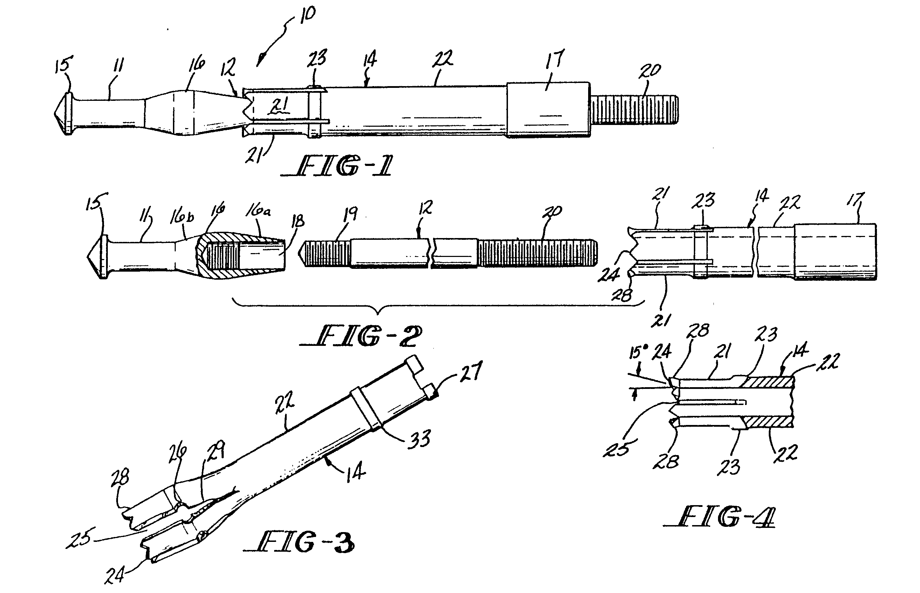

Referring to the drawings, Figure 1 shows a self-undercutting anchor according to this invention, indicated generally by the numeral 10, in side elevational view. The anchor 10 is comprised of a central bolt portion 12 within a sleeve 14. The central bolt portion 12 has a recessed portion 11 positioned between a tip 15 and an expansion cone or expander portion 16. As is best seen in the exploded view in Figure 2, the expander portion 16 is tapered so that it has a portion of increasing diameter 16a nearest the top end of the central bolt 12 and a portion of decreasing diameter 16b nearest the bottom or tip 15 of the bolt portion 12. Intermediate of the expander portion 16 and the tip 15 is the area of reduced diameter or recessed portion 11 that can be used for dust containment during the insertion process. Tip 15 is seen to be conically shaped so that it will facilitate placement of the central bolt portion 12 within a predrilled hole.

As is best seen in Figure 2, the expander portion 16 has a female threaded bore 18 into which threaded end portion 19 is screwed to assemble the central bolt portion 12. At the top of the central bolt portion 12 is a threaded fastening portion 20 that is utilized to secure the object to be fastened once the anchor 10 is expanded within a predrilled hole. Sleeve 14 is shown in Figure 1 and Figure 2 having a first end portion or ring portion 17 of a first predetermined outer diameter at the top of the sleeve. Intermediate the top and the bottom is an area of reduced outer diameter 22 and a shoulder 23 of predetermined third outer diameter greater than the outer diameter of the area of reduced outer diameter 22. Fingers 21 extend from the shoulder 23 downwardly toward the undercut teeth 28. A plurality of elongate slots 25 separate the fingers 21 and extend through the axial length of the shoulder 23. Undercut teeth 28 are angled outwardly and chamfered at an angle of approximately 15° to form cutting edges or edge points 24, as best seen in Figure 4, about the periphery of the sleeve 14. This angle has been selected to permit the chamfered cutting edges 24 of the undercut teeth 28 to fit on top of the increasing diameter portion 16 of the expander portion 16 of central bolt portion 12. However, any angle which permits the edges 24 to set on top of the increasing diameter portion 16a is acceptable.

The sleeve 14 is generally cylindrical in shape and is hollow to permit it to fit over and about the central bolt portion 12. The surface of the fingers 21 is generally smooth. The area of reduced diameter 22 on sleeve 14 may be reduced in diameter from about 5 to about 20% when compared to the end portion 17 with its first diameter. The area of reduced diameter 22 terminates at the first end portion 17 but intentionally extends over the axial length of the sleeve a sufficient length so that the area of reduced diameter 22 covers a distance at least greater than one-third and preferably greater than one-half the axial length of sleeve 14. Similarly, it can be seen in Figures 2 and 4 that the outer surface or periphery of the fingers 21 has a diameter that is less than the collective diameter described by the cutting edge points 24 on the undercut teeth 28 and the diameter of the shoulder 23.

Figure 3 shows an alternative embodiment of sleeve 14. The sleeve 14 has a ring 33 of increased diameter adjacent the top end and a slotted ring 27 at the uppermost portion. Holes 26 can be drilled at the terminus of the expansion slots 25 in an attempt to control the direction of crack propagation into the main body of the sleeve 14. Figure 3 shows best how the expansion slots 25 are cracked so that the sleeve slot expansion crack 29 extends upwardly into the area of reduced diameter 22 of the sleeve 14. In either embodiment, it has been found that having the length of the expansion slots vary from about 1.25 to about 2.0 times the outer diameter of the end portion 17 is desirable. The number of fingers 21 that have been utilized on the sleeve 14 vary from about 3 to about 5. However, as the diameter of the sleeve 14 increases it is possible the number of fingers could be increased beyond 5 also.

The central bolt portion 12 can either be two separate portions, as shown in Figure 2 or can be a single piece expansion cone portion/central bolt portion without the threaded female bore 18 and the threaded end portion 19. The actual length of the portion of increasing diameter 16a of the expander portion 16 has ideally been found to be 0.6 to 1.5 times the axial length of the expansion slots 25 of the anchor sleeve 14, although any length greater than the length of the expansion slots 25 is acceptable. The co-operative interaction of the expansion slots 25 and the length of the expander portion 16 permits the sleeve 14 to be driven down over and about the expander portion or cone 16 until the small diameter on the increasing diameter slope 16a forceably interferes with the inner bore of the fingers 21 of the sleeve 14. Once the forceable interference occurs, the expander portion or expansion cone 16 of the central bolt portion 12 and the fingers 21 of the sleeve 14 are tightly engaged and held. This engagement and holding obviates the need for any tensioning of the central bolt portion 12.

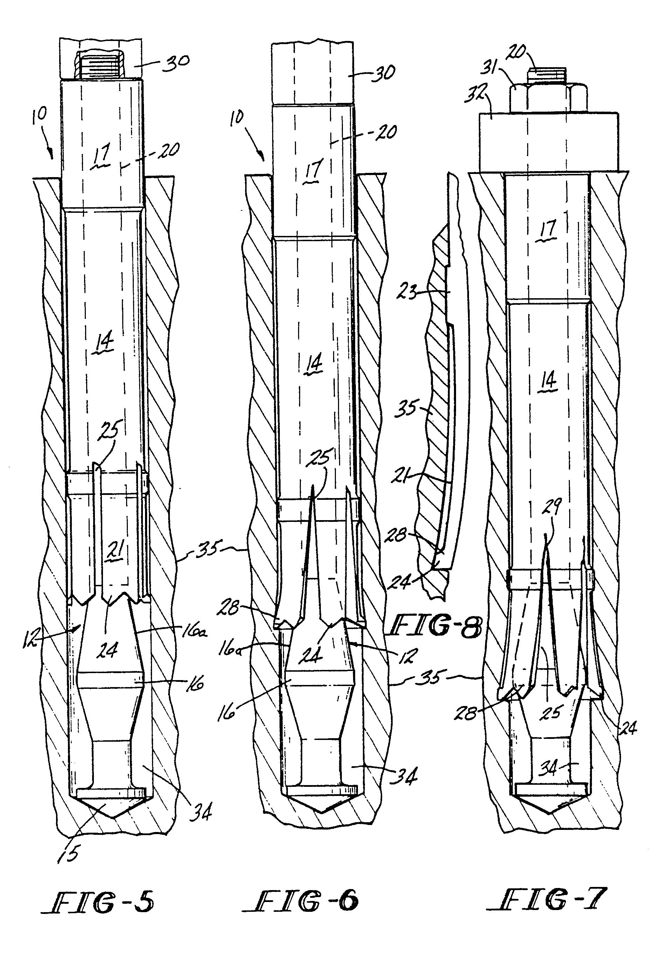

The sleeve 14 may be driven down on top of the expander portion or expansion cone 16 as seen in Figure 5 by the use of an attachment 30 that fits over the threaded fastening portion 20 and rests on the top of the end portion or ring 17. A hammer may be used to drive the attachment 30 and the sleeve 14 downwardly.

The anchor 10, after it has been loaded as shown in Figure 7 by the forcing downwardly of the sleeve 14 over the expander portion 16, can have a nut 31 torqued down on the threaded fastening portion 20 on top of the object 32 to be secured.

Figures 5, 6 and 7 show the progression of the sleeve 14 over the central bolt portion 12 as the anchor 10 is loaded. In all of these Figures the anchor 10 is inserted in a predrilled hole 34. The predrilled hole 34 is of a diameter that is slightly larger than the outer diameter of the sleeve 14 to permit the anchor 10 to fit therewithin. Surrounding material 35, normally concrete, thus can be used to secure the anchor 10 by the action of the fingers 21. In Figure 5, the anchor 10 has just been placed in the predrilled hole 34. The attachment 30 has been placed atop the sleeve and over the threaded fastening portion 20. The fingers 21 with the chamfered edge points 24 are setting on the increasing diameter portion 16a of expander portion 16. The tip 15 is resting on the bottom of the predrilled hole 34.

As loading is begun in Figure 6, such as by hammering on top of the attachment 30, the sleeve 14 begins to move downwardly over the expander portion 16. The fingers 21 begin to ride up the portion of increased diameter 16a of the expander portion 16 and move out radially, expanding the expansion slots 25 at their lower end. This outward radial movement brings the cutting edge points 24 of the teeth 28 into contact with the sidewalls or surrounding material 35 of the predrilled hole 34. The cutting edge points 24 evacuate the surrounding material 35 to begin the self-undercutting operation. As the sleeve 14 continues to move downwardly, as seen in Figure 7, the expansion slots 25 begin to fracture, forming an expansion sleeve slot crack 29. As the sleeve 14 approaches its fully seated position the shoulder 23, with its increased diameter, expands outwardly into the surrounding material 35 to act as a secondary expansion anchoring surface.

The critical effect of the reduced diameter of the fingers 21 when compared to the diameters of the chamfered edge points 24 and the shoulder 23 is best seen in Figure 8. In enlarged fashion, it is seen there that the outward radial expansion of the finger 21 permits the edge point 24 to evacuate the surrounding material 35 along a line that, because of the reduced diameter of the surface of fingers 21, provides the clearance between the surrounding material and the surface of the finger 21. The outward expansion of the fingers 21 also moves the shoulder 23 outwardly into the gripping engagement with the surrounding material 35. When fully loaded, the anchor 10 securely engages the surrounding material 35 in the undercut area, but the self-undercutting has not over-enlarged the predrilled hole 34, nor has the peripheral surface of the fingers 21 significantly come in contact with the sides of the predrilled hole to pulverize or crumble the surrounding material 35.

The avoidance of this over-enlargement of the predrilled hole 34 is achieved by reducing the diameter of the fingers 21, as well as the area of reduced outer diameter 22 just above the shoulder 23. The combination of the relatively short expansion slots 25 with the areas of reduced outer diameters permits the evacuation of the surrounding material 35 from the radially outwardly expanding portions of the sleeve 14 to avoid the pulverization of the surrounding material 35 forming the sidewalls and the over-enlargement of the predrilled hole 34. Since the outer surface of the expandable sleeve 14 is of a generally smooth contour, any stress is evenly distributed over a large area of the surrounding material 35. The evacuated surrounding material 35 falls downwardly in the predrilled hole 34.

Full expansion is achieved when the sleeve 14 has moved downwardly over the portion of increasing diameter 16a of the expander portion 16 to a position where expander portion 16 is above the expansion slot 25. This positioning is sensed by the operator or installer, indicating full expansion of the sleeve 14, when the downward movement of the sleeve 14 stops. The contact of the expander portion 16 with the interior of the sleeve 14 provides increased rigidity and holding strength for the anchor 10.

**Claims**

1. A self-undercutting anchor for insertion and securing in a predrilled hole in a substrate comprising:

(a) a central bolt portion (12) formed at one end with a shaped tip portion (15) for insertion into said hole and at the opposite end (20) with means for securing an attachment to the anchor when secured in said hole;

(b) an expander portion (16) formed on said bolt portion (12) adjacent, but spaced from said tip portion (15) and comprising oppositely directed tapered sections (16a and 16b) orientated so that, when considered along the axis of the bolt the diameter of the expander portion increases from a minimum value at its opposite ends to a maximum value at a point intermediate those ends;

(c) an elongate sleeve (14) slidably engageable with said bolt from said opposite end and having an expansible forward end engageable against the rearwardly directed tapered section (16a) of the expander portion (16) of the bolt (12), the expansible forward end of the sleeve being constituted by a plurality of fingers (21) spaced around the forward end of the sleeve and separated one from the other by a plurality of axial slots (25) formed in the forward end of the sleeve;

(d) the sleeve further having adjacent but spaced from the forward end an annular shoulder (23) extending around said sleeve and intersected by said slots (25), the shoulder having an external diameter greater than the external diameter collectively defined by said fingers (21) and greater than that of the adjacent, rearwardly extending section (22) of the sleeve; and

(e) the forward end of each of said fingers (21) being formed with at least one cutting tooth (28) inclined to the axis of the finger and having a chamfered cutting edge (24), the chamfered cutting edges (24) collectively defining a diameter greater than that collectively defined by the fingers (21); the said cutting edges thereby serving, after placement of the anchor in the predrilled hole, and as the sleeve is driven axially onto the bolt, thereby to force said fingers into engagement with the expansion member with concomitant expansion of the fingers, to make its own undercut in the predrilled hole without the periphery of the fingers touching the inner walls of the hole.

2. An anchor according to claim 1 characterised in that each tooth (24) has an inner surface which rests on the rearwardly facing tapered portion (16b) of the expander portion (16) when the sleeve (14) is placed over and about the central bolt (12) prior to loading the anchor.

3. An anchor according to claim 1 or 2, characterised in that said sleeve (14) has an enlarged end portion (17) at the end remote from said fingers.

4. An anchor according to claim 3, characterised in that the slots (25) dividing the fingers (21) have a length of from 1.25 to 2.0 times the outer diameter of the enlarged end portion (17) of the sleeve.

5. An anchor according to claim 1, 2 or 3, characterised in that the forward end of the sleeve (14) is divided into 3, 4 or 5 fingers (21).

6. An anchor according to any one of claims 1—4, characterised in that the rear end (20) of the central bolt (12) is threaded.

7. An anchor according to any one of claims 1—5, characterised in that the tip (15) of the bolt is cone-shaped.

8. An anchor according to any one of claims 1—6, characterised in that the rearwardly tapered portion (16a) of the expander (16) has an axial length which is from 0.6 to 1.5 times the axial length of said slots.

9. A sleeve for use in an anchor as defined in claim 1, said sleeve having the characteristics defined in said claim under (c), (d) and (e).

10. A sleeve according to claim 9, characterised by the features defined in any one of claims 3, 4 and 8.

**Patentansprüche**

1. Selbstunterschneidender Mauerwerkanker zum Einsetzen in ein und zum Befestigen in einem vorgebohrten Loch in einem Substrat, umfassend:

(a) einen mittleren Bolzenteil (12), der an einem Ende mit einem geformten Spitzenteil (15) zum Einsetzen in das Loch und am gegenüberliegenden Ende (20) mit Mitteln gebildet ist zum Befestigen eines Zusatzgerätes an dem Anker, wenn er in dem Loch befestigt ist;

(b) einen Erweiterungsteil (16), der an dem Bolzenteil (12) dem Spitzenteil (15) benachbart, jedoch in einem Abstand von diesem gebildet ist und entgegengesetzt gerichtete konische Abschnitte (16a und 16b) aufweist, die derart ausgerichtet sind, daß bei Betrachtung entlang der Achse des Bolzens der Durchmesser des Erweiterungsteiles sich von einem minimalen Wert an seinen gegenüberliegenden Enden zu einem maximalen Wert an einer Stelle zwischen diesen Enden vergrößert;

(c) eine längliche Hülse (14), die mit dem Bolzen von dessen gegenüberliegendem Ende verschiebbar in Eingriff bringbar ist und ein ausdehnbares Vorderende hat, welches gegen den nach hinten gerichteten konischen Abschnitt (16a) des Erweiterungsteiles (16) des Bolzens (12) in Eingriff bringbar ist, wobei das ausdehnbare Vorderende der Hülse durch eine Mehrzahl von Fingern (21) dargestellt ist, die rund um das Vorderende der Hülse im Abstand voneinander angeordnet und voneinander durch eine Mehrzahl von axialen Schlitzen (25) getrennt sind, die in dem Vorderende der Hülse gebildet sind;

(d) die Hülse weiterhin nahe ihrem Vorderende, jedoch in einem Abstand von diesem, eine ringförmige Schulter (23) aufweist, die sich rund um die Hülse erstreckt und durch Schlitze (25) durchsetzt ist, wobei die Schulter einen Außendurchmesser hat, der größer als der Außendurchmesser, kollektiv definiert durch die Finger (21), und größer als derjenige des benachbarten sich nach hinten erstreckenden Abschnitts (22) der Hülse ist; und

(e) das Vorderende jedes der Finger (21) mit wenigstens einem Schneidzahn (28) gebildet ist, der zur Achse der Finger schräg verläuft und eine angefaste Schneidkante (24) hat, wobei die angefasten Schneidkanten (24) kollektiv bzw. zusammen einen Durchmesser definieren, der größer als der von den Fingern (21) kollektiv definierte Durchmesser ist; die Schneidkanten dadurch nach Anordnung des Ankers in dem vorgebohrten Loch und dann, wenn die Hülse axial in den Bolzen getrieben wird, um dadurch die Finger in Eingriff mit dem Erweiterungsteil zu bringen mit gleichlaufender Ausdehnung der Finger, dazu dienen, ihre eigene Unterschneidung in dem vorgebohrten Loch zu bilden, ohne daß der Umfang der Finger die Innenwände des Loches berührt.

2. Anker nach Anspruch 1, dadurch gekennzeichnet, daß jeder Zahn (24) eine innere Fläche aufweist, die auf dem nach hinten gewandten konischen Teil (16b) des Erweiterungsteiles (16) ruht, wenn die Hülse (14) vor dem Belasten des Ankers über dem und um den mittleren Bolzen (12) herum angeordnet ist.

3. Anker nach Anspruch 1 oder 2, dadurch gekennzeichnet, daß die Hülse (14) an dem von den Fingern entfernten Ende einen vergrößerten Endteil (17) hat.

4. Anker nach Anspruch 3, dadurch gekennzeichnet, daß die die Finger (21) unterteilenden Schlitze (25) eine Länge haben, die das 1,25- bis 2,0-fache des Außendurchmessers des vergrößerten Endteiles (17) der Hülse beträgt.

5. Anker nach Anspruch 1, 2 oder 3, dadurch gekennzeichnet, daß das Vorderende der Hülse (4) in drei, vier oder fünf Finger (21) unterteilt ist.

6. Anker nach irgendeinem der Ansprüche 1 bis 4, dadurch gekennzeichnet, daß das Hinterende (20) des mittleren Bolzens (12) mit Gewinde versehen ist.

7. Anker nach irgendeinem der Ansprüche 1 bis 5, dadurch gekennzeichnet, daß die Spitze (15) des Bolzens kegelförmig ist.

8. Anker nach irgendeinem der Ansprüche 1 bis 6, dadurch gekennzeichnet, daß der nach hinten konische Teil (16a) des Erweiterungsteiles (16) eine axiale Länge hat, die das 0,6- bis 1,5-fache der axialen Länge der genannten Schlitze beträgt.

9. Hülse zur Verwendung in einem Anker nach Anspruch 1, wobei die Hülse die Eigenschaften hat, die im Anspruch 1 unter (c), (d) und (e) definiert sind.

10. Hülse nach Anspruch 9, gekennzeichnet durch die Merkmale, die in irgendeinem der Ansprüche 3, 4 und 8 definiert sind.

## Revendications

1. Cheville autoforeuse destinée à être introduite et fixée dans un trou préforé dans un substratum, comprenant:

a) une partie boulon centrale (12) ayant à une extrémité un bout façonné (15) pour l'introduction dans le trou et, à l'extrémité opposée (20), un moyen de fixation d'un accessoire à l'ancre quand celle-ci est fixée dans le trou,

b) une partie expanseur (16) faite sur cette partie boulon (12) à une certaine distance du bout (15) et comprenant des parties effilées dirigées en sens contraire (16a et 16b) orientées de façon que dans la direction de l'axe du boulon, le diamètre de la partie expanseur croisse d'une valeur minimale à ses extrémités opposées à une valeur maximale en un point situé entre ces extrémités,

c) un manchon allongé (14) pouvant, par coulissement, être amené en prise avec le boulon depuis ladite extrémité opposée et ayant une extrémité avant expansible pouvant être appliquée contre la partie effilée dirigée vers l'arrière (16a) de la partie expanseur (16) du boulon (12), cette extrémité avant expansible du manchon étant constituée d'une série de doigts (21) espacés autour de l'extrémité avant du manchon et séparés les uns des autres par une série de fentes axiales (25) faites dans l'extrémité avant du manchon,

d) ce manchon ayant en outre à une certaine distance de son extrémité avant un collet (23) qui s'étend autour de lui et est coupé par les fentes (25), ce collet ayant un diamètre extérieur supérieur au diamètre extérieur de l'ensemble des doigts (21) et supérieur au diamètre extérieur de la partie voisine s'étendant vers l'arrière (22) du manchon, et

e) chacun des doigts (21) ayant à son extrémité avant au moins une dent coupante (28) inclinée sur l'axe du doigt et ayant une arête coupante chanfreinée (24), l'ensemble des arêtes coupantes chanfreinées (24) ayant un diamètre supérieur au diamètre de l'ensemble des doigts (21), de sorte que les arêtes coupantes, après mise en place de l'ancre dans le trou préforé, et quand on pousse le manchon axialement sur le boulon pour mettre les doigts en prise avec l'élément d'expansion avec écartement concomitant des doigts, font leur propre affouillement dans le trou préforé sans que la périphérie des doigts touche la paroi du trou.

2. Cheville selon la revendication 1, caractérisée par le fait que chaque dent (24) a une surface intérieure qui repose sur la partie effilée dirigée vers l'arrière (16a) de la partie expanseur (16) lorsque le manchon (14) est placé sur le et autour du boulon central (12) avant le chargement de l'ancre.

3. Cheville selon l'une des revendications 1 et 2, caractérisée par le fait que le manchon (14) a une partie extrême élargie (17) à son extrémité opposée aux doigts.

4. Cheville selon la revendication 3, caractérisée par le fait que les fentes (25) qui séparent les doigts (21) ont une longueur de 1,25 à 2,0 fois le diamètre extérieur de la partie extrême élargie (17) du manchon.

5. Cheville selon l'une des revendications 1 à 3, caractérisée par le fait que l'extrémité avant du manchon (14) est divisée en trois, quatre ou cinq doigts (21).

6. Cheville selon l'une des revendications 1 à 4, caractérisée par le fait que l'extrémité arrière (20) du boulon central (12) est filetée.

7. Cheville selon l'une des revendications 1 à 5, caractérisée par le fait que le bout (15) du boulon est conique.

8. Cheville selon l'une des revendications 1 à 6, caractérisée par le fait que la partie effilée vers l'arrière (16a) de l'expanseur (16) à une longueur axiale de 0,6 à 1,5 fois la longueur axiale des fentes.

9. Manchon destiné à être utilisé dans une cheville selon la revendication 1, ce manchon ayant les caractéristiques définies en c), d) et e) dans cette revendication 1.

10. Manchon selon la revendication 9, caractérisé par les caractéristiques définies dans l'une des revendications 3, 4 et 8.

*FIG-1*

*FIG-2*

*FIG-3*

*FIG-4*

FIG-5

FIG-6

FIG-7

FIG-8